# EUROPÄISCHE PATENTSCHRIFT

(11) **EP 2 161 487 B1**
(45) Veröffentlichungstag und Bekanntmachung des Hinweises auf die Patenterteilung: **10.06.2015**
(21) Anmeldenummer: 09009084.6
(22) Anmeldetag: 11.07.2009
(51) Int. Cl.: F16L 27/107, F16L 55/033

(54) **Vorrichtung zur Dämmung von Biegewellen in einem Bauteilverband**
Device for insulating bending waves in a group of associated components
Dispositif d'amortissement des ondes de flexion dans un assemblage de composants

(30) Priorität: 06.09.2008 DE 102008046185
(43) Veröffentlichungstag der Anmeldung: 10.03.2010
(73) Patentinhaber: ThyssenKrupp Marine Systems GmbH, 24143 Kiel (DE)
(72) Erfinder: Wittekind, Dietrich, Dr.-Ing., 24223 Raisdorf (DE); Franitza, Siegfried, Dr.-Ing., 23564 Lübeck (DE)
(74) Vertreter: Vollmann, Heiko

(56) Entgegenhaltungen:
- EP-A2- 0 862 012
- WO-A1-88/03628
- DE-A1- 1 800 690
- DE-A1- 4 306 585
- DE-C- 863 433
- DE-U1- 20 308 561
- JP-A- H 084 834
- JP-A- 8 303 679
- JP-A- 10 281 386
- JP-A- 2001 032 884
- JP-A- 2001 140 975
- JP-A- 2003 343 642
- JP-A- 2005 098 326
- MÜLLER, HANS-LOTHAR: "Biegewellen-Dämmung an symmetrischen und exzentrischen Sperrmassen", FREQUENZ, vol. 11, no. 10, 31 December 1957 (1957-12-31), pages 325-331,

## Beschreibung

Die Erfindung betrifft eine Vorrichtung zur Dämmung von Biegewellen in einem Bauteilverbund mit den im Oberbegriff des Anspruchs 1 angegebenen Merkmalen.

Körperschall kann sich in Form von Biegewellen ausbreiten und auf diese Weise von einem Bauteil auf damit gekoppelte weitere Bauteile übertragen werden. Oftmals ist es erforderlich, eine solche Schallausbreitung oder Schallübertragung zu verhindern oder zumindest zu vermindern. So ist z. B. auf militärischen Unterseebooten eine konsequente Schalldämmung erforderlich, um eine akustische Signatur so gering wie möglich zu halten.

Die Schalldämmung kann bei einer Schallübertragung über ein Fundament in einfacher Weise durch eine elastische Lagerung des Fundaments erfolgen. Bei einer Körperschallausbreitung über so genannte Schallnebenwege, wie beispielsweise Rohrleitungssysteme, ist die Schalldämmung häufig problematischer. In solchen Rohrleitungssystemen werden zur Körperschalldämmung Kompensatoren oder Schläuche eingesetzt. Diese sollen eine elastische Entkopplung von Rohrleitungsteilen bewirken. Sie haben allerdings den Nachteil, dass sie mit zunehmender Frequenz der Biegewellen versteifen, wodurch sich die schalldämmende Wirkung dieser elastischen Elemente erheblich verringert. Weitere Probleme hinsichtlich der Körperschalldämmung mittels Kompensatoren ergeben sich dann, wenn in den Rohrleitungssystemen aggressive Medien oder unter Druck stehende Medien transportiert werden. In diesen Fällen ist es in der Regel erforderlich, die elastische Entkopplung von Rohrleitungsteilen mittels metallischer Kompensatoren oder Schläuchen vorzunehmen, welche ungünstigere dynamische Eigenschaften aufweisen.

Neben der elastischen Entkopplung ist aus Cremer, L., Heckl, M: Körperschall (Kapitel 5), Berlin: Springer 1996, auch die Verwendung von Sperrmassen zur Körperschalldämmung bekannt. Hier wird beschrieben, wie über die Sperrmasse als solche und insbesondere über das Massenträgheitsmoment dieser Sperrmasse ein dynamischer Widerstand gegen die Ausbreitung von Biegewellen geschaffen wird, indem die Sperrmasse eine Reflektionsstelle für ankommende Biegewellen bildet und auf diese Weise deren Weiterleitung erschwert. Bedeutsam hierbei ist die Biegewellenlänge der Struktur, wie z. B. eines Röhrleitungssystems. Diese Biegewellenlänge hängt neben der Biegesteifigkeit und Massenbewegung der Struktur auch von der Frequenz ab. Dies hat bei Rohrleitungssystemen mit großen und steifen Rohren mit langen Biegewellen niedriger Frequenz zur Folge, dass sehr große Sperrmassen mit einem sehr großen Massenträgheitsmoment erforderlich sind, um eine ausreichende Sperrwirkung zu erzielen. Solche Sperrmassen erfordern in der Regel ausladende Konstruktionen, die bei beengten Raumverhältnissen, wie sie beispielsweise in einem Unterseeboot herrschen, wenn überhaupt, nur schwer zu realisieren sind.

Aus JP 2001-032884 ist es bekannt, eine Sperrmasse in Verbindung mit einer flexiblen Struktur einzusetzen. In diesem Zusammenhang ist zur Leitungsverbindung zweier Bauteile in einem Leitungssystem eine Vorrichtung zur Dämmung von Biegewellen beschrieben, welche einen die Bauteile verbindenden elastischen Teil und eine Sperrmasse aufweist. Der elastische Teil wird von einem Kompensator gebildet, an dem außenseitig eine Sperrmasse angeordnet ist, die den Kompensator über seine gesamte Länge und über seinen gesamten Außenumfang ummantelt.

Vor diesem Hintergrund liegt der Erfindung die Aufgabe zugrunde, eine Vorrichtung zur Dämmung von Biegewellen in einem Leitungssystem zu schaffen, die bei einer kompakten Bauform eine verbesserte Sperrwirkung gegen Biegewellen gewährleistet.

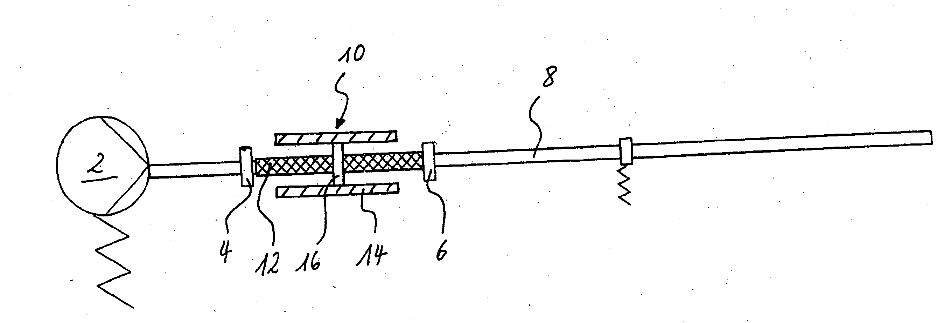

Gelöst wird diese Aufgabe durch eine Vorrichtung mit den in Anspruch 1 angegebenen Merkmalen. Vorteilhafte Weiterbildungen der Erfindung ergeben sich aus den Unteransprüchen, der nachfolgenden Beschreibung sowie der Zeichnung.

Die erfindungsgemäße Vorrichtung zur Dämmung von Biegewellen ist zur Dämmung von Biegewellen in einem Leitungssystem vorgesehen. Bei dem Leitungssystem handelt es sich um ein Rohrleitungssystem zur Leitung eines Fluids. Die Vorrichtung ist zur Kopplung und Leitungsverbindung zweier Bauteile ausgebildet. Gemäß der Erfindung weist die Vorrichtung einen diese Bauteile verbindenden elastischen Teil und eine Sperrmasse auf.

Dies ist insofern vorteilhaft, als die Biegewellenlänge in einem elastischen Bauteil deutlich geringer als in einem starren Bauteil ist und die Sperrmasse daher in Verbindung mit dem elastischen Teil der Vorrichtung deutlich wirksamer als eine alleinige Sperrmasse ist. Auf diese Weise kann die erfindungsgemäß verwendete Sperrmasse gegenüber der aus dem Stand der Technik bekannten Sperrmasse, die an einem biegesteifen Bauteil zur Biegewellendämmung angebracht ist, bei Erzielung der gleichen Sperrwirkung deutlich kleiner dimensioniert sein. Dies macht die erfindungsgemäße Vorrichtung insbesondere zur Biegewellendämmung unter beengten Verhältnissen geeignet. Besonders vorteilhaft ist die erfindungsgemäße Vorrichtung direkt hinter einem Biegewellenerzeuger zwischen diesem Biegewellenerzeuger und einem damit gekoppelten Bauteil angeordnet. So kann die Vorrichtung bei einem Rohrleitungssystem beispielsweise in einem Bauteilverbund, bestehend aus einer Vibrationen erzeugenden Pumpe und einer Rohrleitung, eingesetzt werden, wobei die Pumpe und die Rohrleitung mittels der erfindungsgemäßen Vorrichtung fluidleitend verbunden sind.

Der elastische Teil der erfindungsgemäßen Vorrichtung ist langgestreckt und biegeweich ausgebildet. In diesem Zusammenhang ist unter einer langgestreckten Ausgestaltung eine solche Ausgestaltung des elastischen Teils zu verstehen, bei der die Abmessung des elastischen Teils in Verbindurigsrichtung der Bauteile deutlich größer als quer dazu ist. Aufgrund dieser Eigenschaften können die Masse und das Massenträgheitsmoment der an dem elastischen Teil anzubringenden Sperrmasse für die Erzielung einer gegebenen Wirkung entsprechend gering sein.

Erfindungsgemäß wird als elastischer Teil ein Schlauch eingesetzt. Dies ist insofern vorteilhaft, als Schläuche zur Leitung eines Fluids ausgebildet sind und gleichzeitig die erforderliche Elastizität aufweisen. Der elastische Teil der Vorrichtung ist also ein von einem Fluid durchströmbarer Hohlkörper, der selbst einen Teil des Leitungssystems bildet. Die Bauweise eines solchen Schlauches ist grundsätzlich beliebig und richtet sich im Wesentlichen nach der Art des in dem Rohrleitungssystem zu transportierenden Fluids und den physikalischen Bedingungen wie beispielsweise Temperatur und Druck, unter denen dieses Fluid in dem Rohrleitungssystem transportiert wird.

In Anpassung an die langgestreckte Form des elastischen Teils der erfindungsgemäßen Vorrichtung ist der die Sperrmasse bildende Teil der Vorrichtung ebenfalls langgestreckt ausgebildet und im Wesentlichen in Verbindungsrichtung der beiden zu koppelnden Bauteile ausgerichtet. D. h., die Hauptausdehnung der Sperrmasse erstreckt sich nicht normal, sondern im Wesentlichen parallel zur Ausdehnung des elastischen Teils. Dies verleiht der Vorrichtung eine besonders kompakte Form, da sich die Sperrmasse nur wenig quer zur Längsausdehnung des elastischen Teils aufbaut.

Aufgrund dieser kompakten Form hat die Sperrmasse hohe Eigenfrequenzen. Dies ist deshalb vorteilhaft, weil sich die Wirkung der Sperrmasse oberhalb der ersten, d. h. niedrigsten Eigenfrequenz stark reduziert. Die erfindungsgemäß verwendete Sperrmasse behält allerdings wegen ihrer hohen Eigenfrequenzen auch bei vergleichsweise hohen Biegewellenfrequenzen ihre Biegewellen sperrende Wirkung bei.

Die Sperrmasse ist außenseitig des elastischen Teils der Vorrichtung angeordnet. Dementsprechend wird die Sperrmasse außenseitig des von dem Schlauch gebildeten Strömungskanals angeordnet, wobei nicht nur ein dort angeordnetes Bauteil sondern mehrere Bauteile die Sperrmasse bilden. Durch die außenseitig Anordnung der Sperrmasse ist diese sehr gut zugänglich und kann so durch Austausch oder Umpositionierung leicht an die von ihr auszuführende Dämmaufgabe angepasst werden.

Um eine große Sperrmasse mit einem großen Massenträgheitsmoment bei einer vergleichsweisen kompakten Baugröße zur Verfügung stellen zu können, ist die Sperrmasse in der erfindungsgemäßen Vorrichtung so angeordnet, dass sie den elastischen Teil der Vorrichtung außenseitig umgibt. Besonders vorteilhaft hinsichtlich einer kompakten Bauform der erfindungsgemäßen Vorrichtung ummantelt die Sperrmassen den elastischen Teil im Wesentlichen über seine gesamte Länge und über seinen gesamten Außenumfang, so dass die Sperrmasse eine im Wesentlichen rohrförmige Ausgestaltung aufweist.

Die Sperrmasse ist modular ausgebildet. Dementsprechend besteht die Sperrmasse aus mehreren Teilen, die jeweils an dem elastischen Teil und/oder miteinander befestigt sein können. Je nach Befestigung der einzelnen, die Sperrmasse bildenden Teile, können die Eigenfrequenzen der Vorrichtung zur Erzielung der bestmöglichen Sperrwirkung verändert werden. Erfingdungsgemäß wird die Sperrmasse von schalenförmigen Teilen gebildet, die den elastischen teil nach der Montage rohrförmig umgeben. Schließlich kann die Vorrichtung weiter vorteilhaft zur Aufnahme von Zusatzmassen ausgebildet sein. Dies ermöglicht es, das Massenträgheitsmoment der Sperrmasse gezielt zu erhöhen, um so eine optimale Dämmwirkung zu erreichen.

Wie bereits oben erwähnt worden ist, ist die erfindungsgemäße Vorrichtung besonders vorteilhaft für den Einsatz in Unterseebooten geeignet. Daher sieht die Erfindung vorteilhaft auch ein Unterseeboot vor, bei dem zumindest eine Vorrichtung zur Dämmung von Biegewellen gemäß der Erfindung, beispielsweise in einem Rohrleitungssystem, verwendet wird. Durch die Verwendung der erfindungsgemäßen Vorrichtung zur Dämmung von Biegewellen werden die akustischen-Signatureigenschaften des Unterseeboots deutlich verbessert.

Nachfolgend ist die Erfindung anhand eines in der Zeichnung dargestellten, nicht erfindungsgemäßen Ausführungsbeispiels näher erläutert. Die Zeichnung zeigt in stark vereinfachter schematischer Darstellung einen Teil eines Rohrleitungssystems, der an eine Pumpe angeschlossen ist, wobei zwischen der Pumpe und einem Rohr des Rohrleitungssystems eine Vorrichtung zur Dämmung von Biegewellen angeordnet ist. Die erfindungsgemäße Vorrichtung zur Dämmung von Biegewellen unterscheidet sich von der nachfolgend beschriebenen Vorrichtung lediglich dahingehend, dass bei der erfindungsgemäßen Vorrichtung als elastischer Teil anstelle des Kompensators 12 ein Schlauch verwendet wird. Eine elastisch gelagerte Pumpe 2 ist zur Förderung eines Fluids in ein Rohrleitungssystem vorgesehen. Die Pumpe 2 stellt eine Körperschallquelle dar. Um zu verhindern, dass in dem Rohrleitungssystem aufgrund von Vibrationen der Pumpe 2 Biegewellen und damit einhergehend Körperschall erzeugt werden, ist das Rohrleitungssystem nicht direkt an der Pumpe 2 angeschlossen. Stattdessen ist zwischen einem Flansch 4 am Fluidausgang der Pumpe 2 und einem Flansch 6 am Fluideinlass eines Rohrs 8 des Rohrleitungssystems eine Vorrichtung 10 zur Dämmung von Biegewellen angeordnet.

Die Vorrichtung 10 weist einen elastischen Teil 12 auf. Dieser Teil 12 ist zur Leitung eines Fluids hohlzylindrisch ausgebildet und an den Flanschen 4 und 6 angeschlossen und verbindet so die Pumpe 2 mit dem Rohr 8. Der elastische Teil 12 wird von einem langgestreckten Kompensator 12 gebildet, der in beliebiger Richtung quer zu seiner Längsausdehnung elastisch biegbar ist. Des Weiteren weist die Vorrichtung 10 eine Sperrmasse 14 auf. Diese Sperrmasse 14 ist außenseitig eines flanschartigen Bauteils 16 angeordnet, das an dem Kompensator 12 in etwa auf Höhe dessen halber Länge angebaut ist. Die Sperrmasse 14 ist derart ausgebildet, dass sie den Kompensator 12 über einen Großteil seiner Länge rohrförmig umgibt und bildet eine Reflektionsstelle für von der Pumpe 2 erzeugte Biegewellen. Um die Vorrichtung 10 optimal an die Dämmaufgabe in dem Rohrleitungssystem anpassen zu können, ist die Sperrmasse 14 modular aufgebaut sein. D. h., die Sperrmasse 14 besteht aus mehreren schalenförmigen Teilen, die an dem Bauteil 16 und/oder miteinander befestigt sind. Versuche haben gezeigt, dass für eine Kupferhochdruckleitung mit einem Rohr 8, das eine Nennweite von 100 mm aufweist, bei Einsatz eines Hochdruck-Elastomer-Kompensators 12, an dem in der oben beschriebenen Weise eine 40 kg schwere und 700 mm lange Sperrmasse angebracht ist, der Körperschall bei einer Frequenz von 150 Hz um etwa 20 Dezibel verringert werden kann.

### Bezugszeichenliste

- 2: Pumpe
- 4: Flansch
- 6: Flansch
- 8: Rohr
- 10: Vorrichtung
- 12: Teil, Kompensator
- 14: Sperrmasse
- 16: Bauteil

## Patentansprüche

1. Vorrichtung (10) zur Dämmung von Biegewellen in einem Leitungssystem, welche zur Kopplung und Leitungsverbindung zweier Bauteile ausgebildet ist und welche einen die Bauteile verbindenden elastischen Teil (12) und eine Sperrmasse (14) aufweist, wobei der elastische Teil (12) lang gestreckt und biegeweich ausgebildet ist und von einem Schlauch gebildet wird und die Sperrmasse (14) an dem elastischen Teil (12) angebracht und außenseitig des elastischen Teils (12) angeordnet ist und wobei die Sperrmasse (14) den elastischen Teil (12) im Wesentlichen über seine gesamte Länge und über seinen gesamten Außenumfang ummantelt und modular aus mehreren schalenförmigen Teilen aufgebaut ist.

2. Vorrichtung (10) nach Anspruch 1, **dadurch gekennzeichnet, dass** die Vorrichtung (10) zur Aufnahme von Zusatzmassen ausgebildet ist.

3. Unterseeboot, **dadurch gekennzeichnet, dass** das Unterseeboot zumindest eine Vorrichtung (10) nach einem der Ansprüche 1 oder 2 aufweist.

## Claims

1. A device (10) for insulating bending waves in a conduit system, said device being designed for coupling and the conduit connection of two components and comprising an elastic part (12) connecting the components, and a blocking mass (14), wherein the elastic part (12) is designed in a longitudinally extended and flexible manner and formed by a hose, and the blocking mass (14) is attached on the elastic part (12) and is arranged at the outer side of the elastic part (12), and wherein the blocking mass (14) encases the elastic part (12) essentially over its whole length and over its whole outer periphery and is constructed in a modular manner from several shell-like parts.

2. A device (10) according to claim 1, **characterised in that** the device (10) is designed for receiving additional masses.

3. A submarine, **characterised in that** the submarine comprises at least one device (10) according to one of the claims 1 or 2.

## Revendications

1. Dispositif (10) pour l'amortissement d'ondes de flexion dans un réseau de conduites, qui est conçu pour accoupler et raccorder deux éléments et qui présente une partie élastique (12) qui relie les éléments, et une masse d'arrêt (14), la partie élastique (12) étant de forme allongée et souple en flexion et étant formée d'un tuyau, et la masse d'arrêt (14) étant montée extérieurement sur la partie élastique (12), la masse d'arrêt (14) enveloppant la partie élastique (12) sensiblement sur toute sa longueur et sur toute sa périphérie extérieure, et étant de construction modulaire et faite de plusieurs parties en forme de coque.

2. Dispositif (10) selon la revendication 1, **caractérisé en ce que** le dispositif (10) est conçu pour recevoir des masses rapportées.

3. Sous-marin **caractérisé en ce qu'**il présente au moins un dispositif (10) selon l'une des revendications 1 ou 2.
